(19) Europäisches Patentamt

European Patent Office

Office européen des brevets

(11) Publication number: **0 136 095**
**A2**

(12) # EUROPEAN PATENT APPLICATION

(21) Application number: **84305867.8**

(22) Date of filing: **29.08.84**

(51) Int. Cl.⁴: **C 09 D 11/00**

(30) Priority: **09.09.83 IT 6793183**

(43) Date of publication of application: **03.04.85**
**Bulletin 85/14**

(84) Designated Contracting States: **CH DE FR GB LI NL SE**

(71) Applicant: **Ing. C. Olivetti & C., S.p.a., Via G. Jervis 77, I-10015 Ivrea (Turin) (IT)**

(72) Inventor: **Knirsch, Franco, via Pavone 4C, I-10010 Banchette (Turin) (IT)**
Inventor: **Soudaz, Anna Maria, Via Pinchia 5, I-10015 Ivrea (Turin) (IT)**

(74) Representative: **Bass, John Henton et al, REDDIE & GROSE 16 Theobalds Road, London WC1X 8PL (GB)**

(54) **Ink for printers with a selective jet of electrically conductive ink.**

(57) The ink comprises an aqueous mixture, rendered electrically conductive by means of an electrolyte, with a pigment and possibly a soluble dye in ratios of concentration with respect to the mixture of between 4.5 and 9% of pigment and between 2 and 4% of dye. The electrolyte is added in an amount such as to give a resistivity of the ink of between 40 and 150 Ohm.cm. A wetting agent is moreover added to the mixture so as to give a viscosity of between 1.6 and 1.7 cSt.

EP 0 136 095 A2

ACTORUM AG

INK FOR PRINTERS WITH A SELECTIVE JET
OF ELECTRICALLY CONDUCTIVE INK

The present invention relates to an ink for printers with a selective jet of electrically conductive ink, comprising an aqueous mixture of a colouring substance and an electrolyte.

Inks of the aforesaid type are required in ink jet printers in which the jet is produced electrostatically, thermally or ionically by energizing two electrodes, at least one of which is in contact with the ink.

Inks for such printers have been proposed in which the colouring substance is soluble in water, for which reason it is distributed in the mixture in a perfectly homogeneous manner and does not create problems of clogging of the nozzle in the event of prolonged inactivity of the printing element. However, in printers of the aforesaid type, each dot is printed by a spray consisting of a plurality of particles of this mixture, which often assumes the form of a spray of mist or vapour. The spray therefore proves to be poorly focused, while the printed dot proves to be relatively little resistant to water and light. The technical problem of the invention consists in producing an electrically conductive ink the jet of which is more focused, while the printed dot is clearer and more resistant to water and light.

This technical problem is solved by the ink according to the invention, which is characterised in that the said colouring substance comprises a pigment in a concentration by weight of between 4.5 and 9%.

It is obvious that the solid particles of pigment have a mass much greater than the mass of a droplet of solution of equal volume of the known inks. These particles, subjected to the force of expulsion, acquire a greater inertia, whereby the jet becomes more focused and the particles of pigment penetrate more deeply into the paper and distribute themselves over a more limited area, giving a higher optical density of the printed symbols or characters. It is also clear that these particles are not liable to be dissolved by moisture or to evaporate or fade in light.

The above-mentioned characteristic and the above-mentioned advantages will become more evident from the following description of a number of embodiments of the invention and from the examples of composition which are given.

The electrically conductive ink is particularly suitable for selective ink jet printers in which at least one electrode is immersed in the ink, while the other electrode is disposed adjacent an emission nozzle. By energizing these electrodes with a voltage pulse, a flow of current is produced in the ink, the density of which is at its maximum in the ink in the vicinity of the corresponding nozzle. An emission of particles of ink then takes place towards the paper for the printing of the dot, in the manner described in the Applicants' Italian Patent Application No. 679594/81. The ink for these printers is constituted by an aqueous mixture of a colouring substance rendered electrically conductive by the addition of an electrolyte.

According to the invention, in order to obtain dots which are clearer, with a higher optical density of the symbol or character, and which are resistant to light and water, the ink is constituted by an aqueous mixture with electrolytic salt in which the colouring substance comprises at least one suitably chosen pigment, possibly in admixture with a dye soluble in the mixture, in optimum ratios of concentration between them and with respect to the mixture./The pigments are finely ground, solid coloured substances with a particle size between 100 and 200 $\overset{o}{A}$ which are dispersible in water and stable to light and water. For the inks of the invention, the pigments are chosen so as to be compatible with the various constituents of the mixture and with a concentration by weight of the pure pigment in the mixture of between 4.5 and 9%.

The colour of the pigments may be black or they may be of one of the primary colours used in polychrome printing. The following commercial pigments, which are supplied in dispersion with water in a concentration by weight of 30%, have given optimum results: Colanyl Black (Hoechst), NZPF Black (Bayer), Flexonyl Yellow (Hoechst),

- 4 -

Flexonyl Blue (Hoechst), Hostatint Red (Hoechst), DFG Signal Yellow DFG (ACNA).

To the pigment there may be added a dye which has a high solubility in water, affinity for cellulose, good resistance to water and light and is compatible with the pigment in question. Optimum results have been given by the following dyes, in a concentration of between 2 and 4% with respect to the mixture: Kayaset Black 008N, 008M, 032C, 009N (Nippon Kayaku), Duasyn Direct Black HSF (Hoechst), Dermacarbon 2GT (Sandoz), Coranyl Direct Black (Hoechst). In the case of use of soluble dyes, the pH of the solution is optimized instance by instance, utilizing appropriate pH correctors, in manner known per se.

In order to give the resistivity required by the printing device, the electrolyte is preferably chosen from among strongly ionizable salts or strong bases, such as $LiCl$, $LiNO_3$, $KNO_3$, KOH, NaOH, etc. The concentration, which may be variable according to the compound chosen, must ensure a high resistivity of the ink up to 180 Ohm.cm, for the purpose of heightening the thermal effect of the electric pulse in the printing process. Preferably, this concentration is between 0.5 and 2.0%, so as to obtain a resistivity between 40 and 150 Ohm.cm.

Intrinsically, the printing process is not subject to clogging problems inasmuch as it is self-cleaning. Nevertheless, the cleaning of the nozzle is facilitated and ensured by the presence of a wetting compound in the ink. Various glycol derivatives are used as wetting agents, with or without the addition of quaternary ammonium salts, for example: glycerine, polyethylene glycol (Carbowax 200), triethylene glycol, etc. The concentration of the wetting agent must be such as to maintain the viscosity of the ink in the order of 1.5 - 2.5 cSt, preferably between 1.6 and 1.7 cSt, and the surface tension below 60 cSt, preferably between 38 and 43 cSt.

In order to avoid the formation of foam, and therefore of bubbles, and the growth of moulds, auxiliary additives are introduced into the formulation. Anti-foaming additives with suitable performances are mixtures of alcohols (example, Additol KW 314 by Hoechst) or silicon compounds (example, Antifoam emulsion SE 2, SE 47 by Wacker). As bactericidal antifermentative agents there may be used, for example: Omadine (Olin Corp.), Acticide BG (Thor), Germal 115 (Sutton Laboratories Inc.).

The ink is prepared by mixing the various constituents with prolonged agitation and, if necessary, suitably correcting the pH. The ink is thereafter filtered through filters with a porosity of 5 microns. The filtered ink is degassed and made up in suitable cartridges, for example of the type described in the Applicants' Patent Application No. 68663A/81.

The optical density of the symbols printed with the inks obtained in this way, when measured with a Leitz MPV3 microdensitometer, has proved to be about 1. The print has been found to be very resistant to water and light.

The following Examples illustrate a number of standard formulations of inks which, having been tested in the ink jet printing process hereinbefore mentioned, have given optimum results.

Example 1

25 g of NZPF Black (Bayer), in which the pigment is in the form of an aqueous dispersion with a concentration of 30%, are added to about 60 ml of demineralized water. 0.75 g of lithium chloride as electrolyte and 2.5 g of glycerine as wetting agent are moreover added and the mixture is brought to 100 ml with demineralized water. After careful agitation, filtration is carried out with a 5 micron filter. The ink obtained has a resistivity of 95 Ohm.cm, a surface tension of 43 dynes/cm and a viscosity of 1.6 cSt.

Example 2

20 g of Hostatint Red (Hoechst), in which the pigment is in dispersion at a concentration of 30%, 5 g of glycerine and 0.5 g of lithium chloride are added to about 60 ml of demineralized water. The mixture is brought to 100 ml with demineralized water. After careful agitation, filtration is carried out on a 5 micron filter. An ink is obtained with a resistivity of 150 Ohm.cm, a surface tension of about 38 dynes/cm and a viscosity of 1.6 cSt.

Example 3

20 g of Colanyl Black (Hoechst) in dispersion, 10 g of Carbowax 200, 2 g of lithium chloride and 0.1 g of silicon antifoam are added to about 60 ml of demineralized water. The mixture is diluted to 100 ml with demineralized water, agitated and filtered as in the preceding Examples. An ink with a resistivity of 40 Ohm.cm and a viscosity of 1.7 cSt is obtained. The antifoam does not permit measurement of the surface tension.

Example 4

3 g of Duasyn Direct Black HSF (Hoechst) are added, as water-soluble dye, to 40 ml of demineralized water. 20 g of NZPF Black (Bayer) in dispersion, 5 g of Carbowax 200 and 20 ml of sodium hydroxide solution with a concentration of 20 g/l are then added. The mixture is brought to 100 ml with demineralized water. After careful agitation, filtration is carried out as in the preceding Examples. The ink obtained has a resistivity of 90 Ohm.cm, a surface tension of 40 dynes/cm and a viscosity of 1.6 cSt.

It is understood that various modifications and improvements may be made in the Examples of formulation described without departing from the scope of the invention.

CLAIMS

1. Ink for printers with a selective jet of electrically conductive ink, comprising an aqueous mixture of a colouring substance and an electrolyte, characterised in that the said colouring substance comprises at least one pigment in a concentration by weight of between 4.5 and 9%.

2. Ink as in claim 1, characterised in that a water-soluble dye is added to the mixture in a concentration of between 2 and 4%.

3. Ink as in claim 1 or 2, characterised in that the said electrolyte is constituted by at least one strongly ionizable salt or by a strong base and is mixed in an amount such as to impart to the ink a resistivity of between 40 and 150 Ohm.cm.

4. Ink as in claim 3, characterised in that a wetting substance such as to give the mixture a surface tension of between 38 and 43 dynes/cm and a viscosity of between 1.6 and 1.7 cSt is added thereto.

5. Ink as in any one of the preceding claims, characterised in that the said pigment is chosen from among the following commercial products: Colanyl Black (Hoechst), NZPF Black (Bayer), Flexonyl Yellow (Hoechst), Flexonyl Blue (Hoechst), Hostatint Red (Hoechst), Signal Yellow DFG (ACNA).

6. Ink as in claim 5, characterised in that a direct dye soluble in water and compatible with the pigment is added to it in a concentration of between 2 and 4% with respect to the mixture.

7. Ink as in claim 6, characterised in that the said dye is chosen from among the following commercial products: Kayaset Black (Nippon Kayaku), Duasyn Direct Black HSF (Hoechst), Dermacarbon 2GT (Sandoz), Coranyl Direct Black (Hoechst).

8. Ink for printers with a selective jet of electrically conductive ink, substantially as described with reference to the Examples given.